# EUROPEAN PATENT APPLICATION

(11) **EP 4 365 835 A1**
(43) Date of publication of application: **08.05.2024**
(21) Application number: 22832495.0
(22) Date of filing: 22.03.2022
(51) Int. Cl.: G06T 7/20, G06Q 10/08

(54) **WORK ANALYSIS DEVICE AND METHOD**

(30) Priority: 28.06.2021 JP 2021106645
(71) Applicant: Panasonic Intellectual Property Management Co., Ltd., Kadoma-shi, Osaka 571-0057 (JP)
(72) Inventor: ITOH, Tomoaki, Kadoma-shi, Osaka 571-0057 (JP); ICHIRIKI, Tomokazu, Kadoma-shi, Osaka 571-0057 (JP); SHIN, Hidehiko, Kadoma-shi, Osaka 571-0057 (JP); ICHIMURA, Daijiroh, Kadoma-shi, Osaka 571-0057 (JP)
(74) Representative: Eisenführ Speiser
(86) International application number: PCT/JP2022/013283
(87) International publication number: WO 2023/276332

(57) **Abstract**

A task analysis device for generating information on task performed by an operator, comprising: an input interface to acquire image data indicating an image of the operator performing the task; and a controller to detect the task performed by the operator sequentially, based on the image data, to generate task detection information indicating a detection result of the task, wherein the task includes a plurality of processes performed by the operator, and the controller compensates the task detection information by interpolating a detection result of the task within an undetected period, in accordance with a pre process and/or a post process of the undetected period, the undetected period being a period in which the task is not detected, the pre process being a process of the task detected previously to the undetected period, and the post process being a process of the task detected subsequently to the undetected period.

## Description

### TECHNICAL FIELD

The present disclosure relates to a task analysis device and method.

### BACKGROUND ART

Patent Document 1 discloses an operation analysis system that detects a boundary between actions of a person involved in an operation, to make an analysis of the operation. The system according to Patent Document 1 captures a video of the actions of the operation using a camera, acquires time-series signals of the positions and the speeds of the hands of the worker from image data of the video, and detects the minimum or the like of the time-series speed signals, as the boundary between the actions. The system of Patent Document 1 uses such a boundary between the actions to identify what is done in the operation and the start/end time of the operation, by running a pattern matching of the acquired positions with a reference pattern. The system of Patent Document 1 uses the time of the action boundary, as a start time or an end time of the pattern matching, , or in correcting the time of the operation identified by pattern matching, to identify the boundary of operation.

### Patent Documents

Patent Document 1: JP 2009-032033 A

### SUMMARY

The present disclosure provides a task analysis device and method capable of detecting a specific task performed by an operator accurately.

A task analysis device according to one aspect of the present disclosure generates information on a task performed by an operator. The task analysis device includes input interface and a controller. The input interface acquires image data indicating an image of the operator performing the task. The controller detects the task performed by the operator sequentially based on the image data, to generate task detection information indicating a detection result of the task. The task includes a plurality of processes performed by the operator. The controller compensates the task detection information by interpolating a detection result of the task within an undetected period, in accordance with one or both of a pre process and a post process of the undetected area, the undetected period being a period in which the task is not detected, the pre process being a process of the task detected previously to the undetected period, and the post process being a process of the task detected subsequently to the undetected period.

These general and specific aspects may be implemented by a system, a method, and a computer program, and a combination thereof.

With the task analysis device and method according to the present disclosure, it is possible to detect a specific task performed by an operator accurately.

### BRIEF DESCRIPTION OF DRAWINGS

Fig. 1 is a view illustrating an overview of a task analysis system according to a first embodiment;
Fig. 2 is a block diagram illustrating a configuration of a task analysis device included in the task analysis system;
Figs. 3A to 3C are views for explaining a problem related to the task analysis device;
Figs. 4A and 4B are views for explaining an operation of the task analysis device;
Fig. 5 is a flowchart for explaining an overall operation of the task analysis device;
Fig. 6 is a flowchart illustrating task detection processing performed in the task analysis device according to the first embodiment;
Figs. 7A to 7C are views for explaining the task detection processing;
Fig. 8 is a flowchart illustrating task detection processing performed in a task analysis device according to a modification of the first embodiment;
Figs. 9A and 9B are views for explaining task detection processing performed in a task analysis device according to a second embodiment;
Fig. 10 is a flowchart illustrating the task detection processing according to the second embodiment;
Fig. 11 is a view for explaining task detection processing performed in a task analysis device according to a third embodiment;
Fig. 12 is a flowchart illustrating the task detection processing according to the third embodiment;
Figs. 13A and 13B are views for explaining task detection processing performed in a task analysis device according to a fourth embodiment;
Fig. 14 is a flowchart illustrating the task detection processing according to the fourth embodiment;
Fig. 15 is a flowchart illustrating task detection processing according to a first modification; and
Fig. 16 is a flowchart illustrating task detection processing according to a second modification.

### DETAILED DESCRIPTION

Some embodiments will now be explained in detail with reference to some drawings, as appropriate. However, descriptions more in detail than necessary may be omitted. For example, detailed descriptions of well-known matters and redundant descriptions of substantially the same configurations may also be omitted. This is to avoid unnecessary redundancy in the description below, and to facilitate understanding of those skilled in the art. Note that the inventor(s) provide the accompanying drawings and the following description to facilitate those skilled in the art to fully understand the present disclosure, and the accompanying drawings and the following description are not intended to limit the subject matter defined in the claims in any way.

### (First Embodiment)

### 1. Configuration

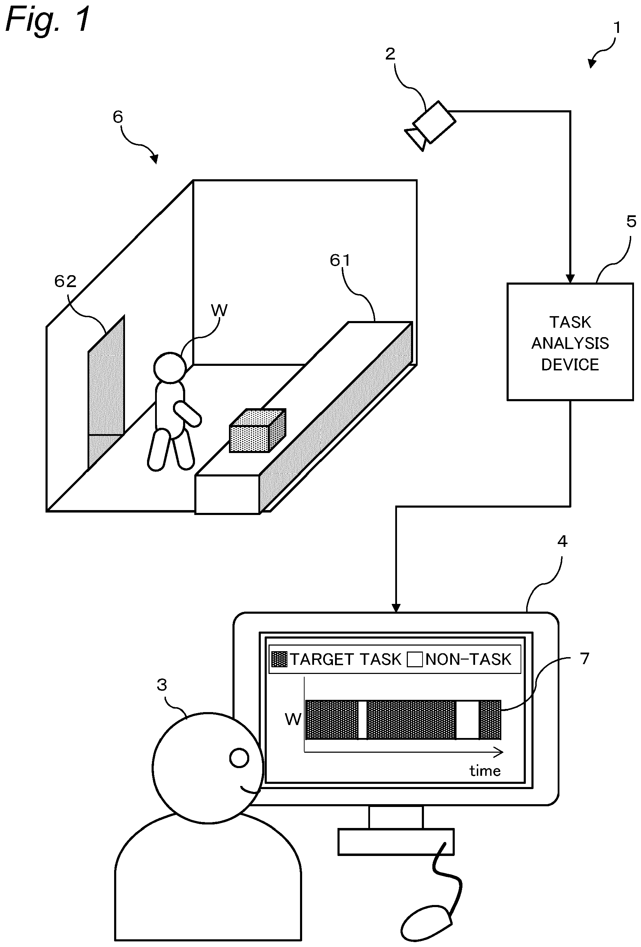

A task analysis system according to a first embodiment will now be explained with reference to Fig. 1. Fig. 1 is a view illustrating an overview of a task analysis system 1 according to the present embodiment.

### 1-1. System Overview

As illustrated in Fig. 1, the system 1 includes a camera 2 and a task analysis device 5. The system 1 is used for analyzing the efficiency or the like of an operator W who performs a task such as a carrying task, in a workspace 6 such as a logistics warehouse. The system 1 may include a monitor 4 for presenting a user 3, such as an administrator or an analyzer in the workspace 6, with a task timeline 7 over a predetermined analysis period. The analysis period is a period to be analyzed by image recognition using the camera 2 in the system 1, and is set in advance, as a period ranging from one day to several months, for example.

The task timeline 7 presents task performed by the operator W, under the classifications of a "target task" that is a task set as task to be analyzed by the system 1, and "non-task" other than the target task, at each time. The task analysis device 5 in this example classifies the task other than the target task as the non-task, in the task timeline 7 (i.e., non-task is also included in the task).

In the example illustrated in Fig. 1, a conveyor line 61 and an unloading port 62 are installed in the workspace 6. In this example, the task performed by the operator W in the workspace 6 includes the carrying task of a package, a task such as moving without handling of any package, and the like. In the task analysis system 1 according to the present embodiment, the carrying task is set as the target task in advance, for example.

With the task analysis system 1 according to the present embodiment, for example, by presenting the task timeline 7 to the user 3, the user 3 can analyze the task performed by the operator W in the temporal order, in order to consider possible improvements in the efficiency of the task in the workspace 6, for example.

The camera 2 in the system 1 is disposed to capture an image of the operator W doing the task in the workspace 6 to be captured. The camera 2 repeats an image capturing operation in the workspace 6, at a predetermined cycle, and generates image data indicating the captured image, for example. The camera 2 is connected to the task analysis device 5 so that the image data is transmitted to the task analysis device 5, for example. Note that, although one camera 2 is illustrated in Fig. 1, the camera 2 included in the system 1 is not limited to one camera, and may include two or more cameras.

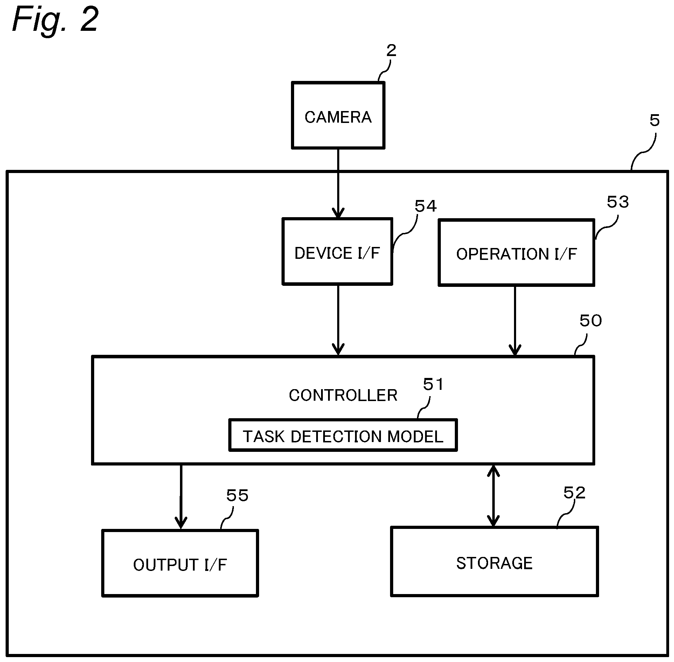

The task analysis device 5 is implemented with an information processing device, such as a server. The task analysis device 5 is communicably connected to an external information processing device, such as a personal computer including the monitor 4. A configuration of the task analysis device 5 will now be explained with reference to Fig. 2.

### 1-2. Configuration of Task Analysis Device

Fig. 2 is a block diagram illustrating the configuration of the task analysis device 5. The task analysis device 5 illustrated in Fig. 2 includes a controller50, a storage52, an operation interface 53, a device interface 54, and an output interface 55. Hereinafter, the interface is abbreviated as an "I/F".

The control unit 50 includes, for example, a CPU or an MPU that performs a predetermined function, in cooperation with software, and controls the overall operation of the task analysis device 5. The control unit 50 performs various functions by reading data and programs stored in the storage 52, performing various operations. For example, the control unit 50 includes a task detection model 51 that performs a task detection function using image recognition processing.

The task detection model 51 is configured using a trained model of a neural network, such as a convolutional neural network. The task detection model 51 executes the image recognition processing to an image indicated by image data. The task detection model 51 outputs, as a detection result, a detection area indicating the area in which a preset detection target is shown in the image, for example. In the present embodiment, the detection target of the task detection model 51 is set to the target task such as the carrying task (or an operator performing the target task). The detection area is defined by horizontal positions and vertical positions in the image, and indicates a rectangular area surrounding the detection target, for example.

In the present embodiment, when the area corresponding to the detection target cannot be recognized in the image (when no performance of the carrying task can be detected), the task detection model 51 outputs null, as a detection result, for example. The detection result may include, for example, information indicating the time at which the image was captured. The task detection model 51 can be obtained by running supervised training that uses, as teacher data, image data associated with a ground truth label indicating ground truth, where the ground truth is an image including an operator handling a package in his/her hand. The task detection model 51 may also be trained to detect a subcategory into which the detection target, such as the target task, is classified, or another category different from the target task.

The trained model used as the task detection model 51 is not limited to a neural network, and may be a machine learning model related to various types of image recognition. The task detection model 51 may use various image recognition algorithms, without limitation to machine learning, and may be configured to be executed by rule-based image recognition processing, for example.

The controller 50 executes a program including a group of commands for performing the function of the task analysis device 5, for example. Such a program may be provided over a communication network such as the Internet, or stored in a portable recording medium. The controller 50 may also include an internal memory, as a temporary storage area, where various types of data and programs are retained.

Note that the controller 50 may be a hardware circuit such as a dedicated electronic circuit designed to perform a predetermined function, or a reconfigurable electronic circuit. The controller 50 may include various semiconductor integrated circuits such as a CPU, an MPU, a GPU, a GPGPU, a TPU, a microcomputer, a DSP, an FPGA, and an ASIC.

The storage 52 is a storage medium that stores therein programs and data required for performing the function of the task analysis device 5. The storage 52 includes a hard disk drive (HDD) or a semiconductor storage device (SSD), for example,. The storage 52 stores therein various types of information such as the program and parameters for the trained model of the task detection model 51 described above.

The storage 52 may include a temporary storage element including a DRAM or an SRAM, and may function as a working area of the controller 50, for example. For example, the storage 52 may temporarily store image data received from the camera 2, and a detection result from the task detection model 51.

The operation I/F 53 is a general term indicating operation members that receive user operations. The operation I/F 53 includes any one of a keyboard, a mouse, a trackpad, a touchpad, a button, and a switch, or a combination thereof, for example. The operation I/F 53 acquires various types of information input via a user operation.

The device I/F 54 is a circuit via which an external device such as the camera 2 is connected to the task analysis device 5. The device I/F 54 communicates with an external device, in accordance with a predetermined communication standard. Examples of the predetermined standard include USB, HDMI (registered trademark), IEEE 1395, IEEE 802.11, and Bluetooth (registered trademark). The device I/F 54 is an example of an input interface that receives various types of information from an external device, in the task analysis device 5. In the task analysis system 1, the task analysis device 5 acquires image data indicating a video captured by the camera 2, via the device I/F 54, for example.

The output I/F 55 is a circuit to output information. The output I/F 55 outputs signals such as video signals to an external display device such as a monitor and a projector for displaying various types of information, in compliance with the HDMI standard, for example.

The configuration of the task analysis device 5 described above is merely exemplary, and the configuration of the task analysis device 5 is not limited thereto. The task analysis device 5 may be configured using various types of computers, including a personal computer (PC). In addition to or instead of the output I/F 55, the task analysis device 5 may include a display unit including a liquid crystal display or an organic EL display as a built-in display device, for example. In addition, the task analysis method according to the present embodiment may be executed by distributed computing.

In addition to or instead of the above configuration, the task analysis device 5 may have a configuration that communicates with an external information processing device over a communication network. For example, the operation I/F 53 may be configured to receive an operation performed by an external information processing apparatus that is connected over a communication network. Furthermore, the output I/F 55 may transmit various types of information to an external information processing apparatus over a communication network.

In addition, the input interface in the task analysis device 5 may be implemented by cooperating with various kinds of software in the controller 50, for example. The input interface in the task analysis device 5 may acquire various types of information by reading the various types of information stored in various storage media (e.g., the storage 52) onto the working area of the controller 50.

### 2. Operation

An operation of the task analysis system 1 and the task analysis device 5 having the configurations described above will now be explained.

The task analysis system 1 illustrated in Fig. 1 detects the target task performed by an operator W in the workspace 6 at each time, using the image recognition processing. The system 1 accumulates the information indicating the detection result of the target task, and generates the task timeline 7 to visualize time at which the target task performed by the operator W is detected during the analysis period, based on the accumulated information.

In such an operation, even at the time at which the operator W performs the target task, image recognition may fail to detect the performance of the target task, due to a reason that the captured image does not include a part characteristic for detecting the target task on the captured image, for example. In contrast to this, according to the present embodiment, the task analysis device 5 can compensate the detection result of the image recognition for even the time at which the target task is not to be detected in the task analysis system 1, and thus can estimate the target task performed by the operator W accurately.

### 2-1. Problem

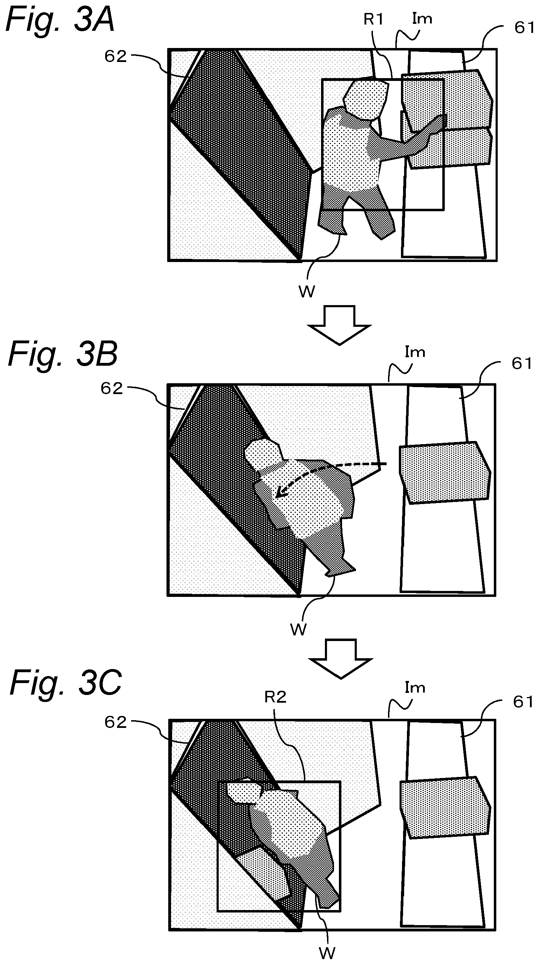

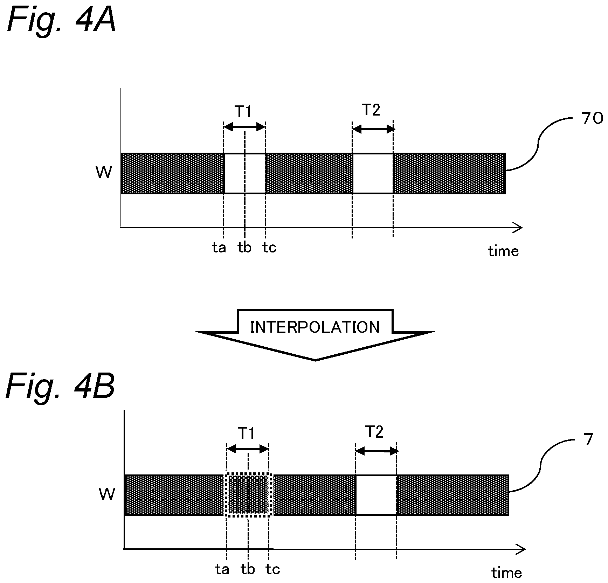

A scene that may obstruct determining the task performed by an operator W detected at each time, in the task analysis system 1 according to the present embodiment, will now be explained with reference to Figs. 3A to 3C and 4. An example in which the target task is the carrying task will be used in the explanation.

Figs. 3A to 3C are views for explaining a problem related to the task analysis device 5. Figs. 3A to 3C illustrate captured images Im obtained by the camera 2 capturing images of an operator W performing the carrying task in the workspace 6. Figs. 4A and 4B are views for explaining an operation of the task analysis device 5. Figs. 4A and 4B illustrate task timelines 70, 7 before and after the compensation is applied by the task analysis device 5, respectively in accordance with the example illustrated in Figs. 3A to 3C. Each of the task timelines 70, 7 is an example of the task detection information according to the present embodiment.

Fig. 3A illustrates a scene in which the operator W picks up a package from the conveyor line 61 in the carrying task. Fig. 3B illustrates a scene in which the operator W carries the picked package, from the scene illustrated in Fig. 3A. Fig. 3C illustrates a scene in which the operator W having carried the package places the package into the unloading port 62, from the scene illustrated in Fig. 3B. As described above, the carrying task includes a process "picking up" a package from the conveyor line 61, a process "carrying" the package to the unloading port 62, and a process "placing" the package in the unloading port 62.

In the example illustrated in Fig. 3A, a detection area R1 corresponding to the process of the operator W "picking up" the package is recognized by the image recognition, and therefore, the carrying task is detected from the captured image Im received from the camera 2. Accordingly, the uncompensated task timeline 70 illustrated in Fig. 4A, indicates that the carrying task, which is the target task, is detected up to time ta corresponding to the scene illustrated Fig. 3A, for example.

In the example illustrated in Fig. 3B, the operator W is carrying the package, but the package is hidden behind the body of the operator W, in line of sight of the camera 2. As mentioned above, the carrying task is sometimes not detected by the image recognition, in situations in which the operator W carrying a package is not visible in the captured image Im. In such situations, as illustrated in Fig. 4A, the uncompensated task timeline 70 indicates no detection of the target task during a period T1 including time tb corresponding to Fig. 3B.

The package then appears again in the captured image Im in the example of Fig. 3C, and a detection area R2 corresponding to the process "placing" the package by the operator W is recognized, and therefore, the carrying task is detected. Accordingly, the uncompensated task timeline 70 illustrated in Fig. 4A indicates that the target task is detected again from time tc corresponding to the scene illustrated in Fig. 3C.

As described above, for detecting the task performed by the operator W in the workspace 6 at each time, a possible problem is that an undetected period T1 for the target task may occur, that is, the image recognition fails to detect the performance of the carrying task although the carrying task is actually performed by the operator W..

Therefore, in the present embodiment, the task analysis device 5 performs compensation processing to interpolate the detection result detected by the task detection model 51, by utilizing the processes performed by the operator W prior to and/or subsequently to the undetected period T1 described above. For example, as the processes illustrated in Figs. 3A to 3C are performed sequentially in one cycle of the carrying task, it is possible to use these processes in interpolating the detection result. These processes are examples of a process in which the operator W starts moving an object, such as a package, a process in which the operator W continues moving the object, and a process in which the operator W ends moving the object, in the target task according to the present embodiment. Fig. 4B illustrates the task timeline 7 compensated by the task analysis device 5, from the task timeline illustrated in Fig. 4A.

For example, the scene illustrated in Fig. 3B can be estimated to be that the operator W is carrying the package, as the next process is placing the package illustrated in Fig. 3C. By performing the compensation processing reflecting the estimation, the task analysis device 5 according to the present embodiment interpolates the detection result with the target task being performed in the undetected period T1, to obtain the compensated task timeline 7 as illustrated in Fig. 4B. In addition, the task analysis device 5 according to the present embodiment performs the compensation processing so as not to interpolate the detection result in the target task erroneously in a period T2 in which the target task is not performed by the operator W. Therefore, the target task, as the specific task performed by the operator W, can be detected accurately.

### 2-2. Overall Operation

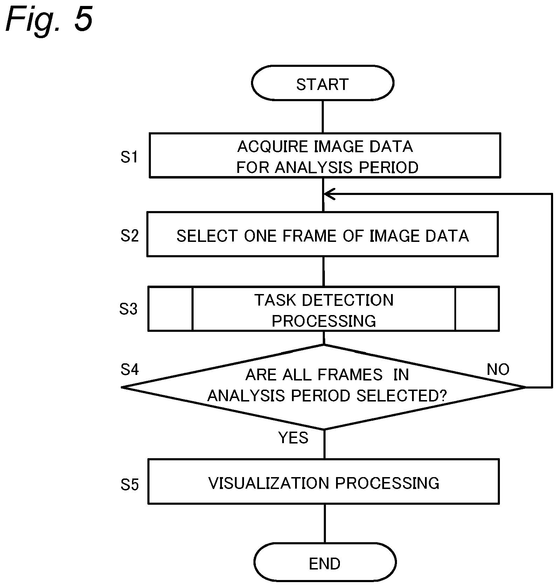

An overall operation performed by the task analysis device 5 in the task analysis system 1 will now be explained with reference to Fig. 5.

Fig. 5 is a flowchart for explaining the overall operation of the task analysis device 5. The processing indicated in this flowchart is performed by the controller 50 in the task analysis device 5, for example.

To begin with, the controller 50 acquires the image data within the analysis period from the camera 2 via the device I/F 54, for example (S1). While the operator W is working in the workspace 6, the camera 2 captures a video to generate image data indicating the captured image at each time at a predetermined cycle such as a frame cycle of the video, and records the image data in the internal memory, for example. The camera 2 transmits the image data recorded over the analysis period, to the task analysis device 5. The controller 50 stores the acquired image data in the storage 52, for example.

The controller 50 then selects the image data corresponding to one frame indicating an image captured at each of the certain intervals, in the temporal order, from the acquired image data within the analysis period, for example (S2). The controller 50 then records the time at which the selected one frame is captured, as a time in the task timeline 70, 7, for example.

The controller 50 detect the carrying task by causing the task detection model 51 to perform the image recognition processing on the image data corresponding to the selected one frame (S3). The controller 50 then holds the detection result in the storage 52, for example. In such task detection processing (S3), using the detection result on the frame, the controller 50 interpolates a past detection result presuming that the target task is detected in the last undetected period T1.

In the task detection processing according to the present embodiment, the compensation processing of the detection result is implemented by causing the task detection model 51 to detect a plurality of processes included in the carrying task, distinguishing from one another among the processes. For example, the task detection model 51 according to the present embodiment is trained using machine learning so as to output a detection area associated with any one of a plurality of preset categories, as the detection result of the carrying task. The plurality of categories include the processes of "picking up", "carrying", and "placing" a package in the carrying task. For example, the task detection model 51 is trained with training data including, as a grand truth, images of a person performing the processes of the respective categories. The task detection processing (S3) according to the present embodiment using such a task detection model 51 will be described below in detail.

When there is any frames having been not selected yet, among those included in the image data corresponding to the analysis period (NO in S4), the controller 50 repeats the processing in steps S1 to S3, for the image data captured at following time.

When all of the frames in the analysis period are selected (YES in S4), the controller 50 performs visualization processing (S5) to generate the task timeline 7 providing the user with visualization of the detection result corresponding to the respective frames. In step S5, the compensated task timeline 7 is generated based on the detection result applied with the interpolation in the task detection processing (S3).

The controller 50 stores the task timeline 7 generated by the visualization processing (S5) in the storage 52, and ends the processing illustrated in this flowchart, for example.

With the processing described above, the task of the operator W is detected from the image data at each time (S2 to S4), and the detection result in a undetected period T1 is interpolated with the target task (S3). In this manner, an accurate task timeline 7 can be obtained from the detection result detected at each time.

Note that, in step S1 described above, image data generated by the camera 2 may be acquired successively. For example, instead of step S4, the controller 50 may repeat the processes in step S1 and subsequent steps until the detection result of the performed task are obtained based on the image data for the number of frames in the analysis period.

In the visualization processing (S5), in addition to or instead of the task timeline 7, the controller 50 may also generate an analysis chart indicating a ratio of the target task with respect to the non-task in the analysis period, for the operator W. For example, the controller 50 counts the number of times by which the target task and the non-task are detected, based on the results of detecting the carrying task performed by the operator W at each time interval, such as a frame cycle. Upon obtaining the total number of times by which each performed task is detected in the analysis period, for each operator, in the manner described above, the controller 50 calculates the ratio of each of the tasks performed by the specific operator, and generates an analysis chart. The analysis chart indicates the ratio of each type of task, as a ratio of the time for the respective performed tasks, with respect to the analysis period, for example.

### 2-3. Task Detection Processing

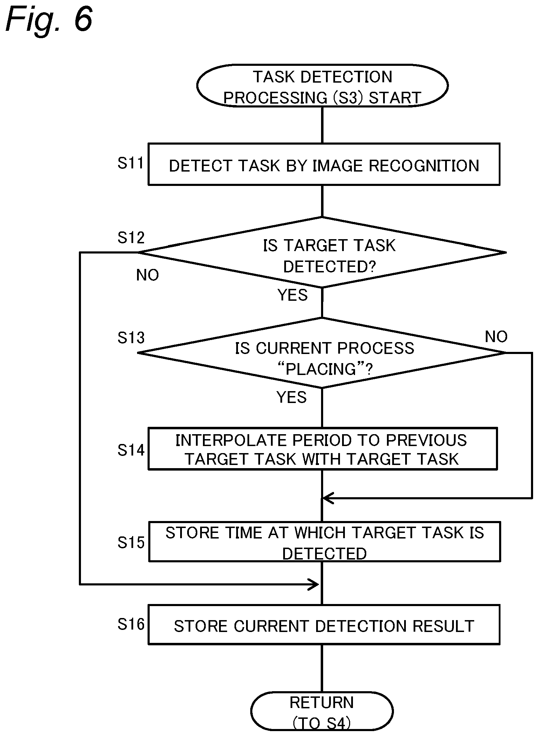

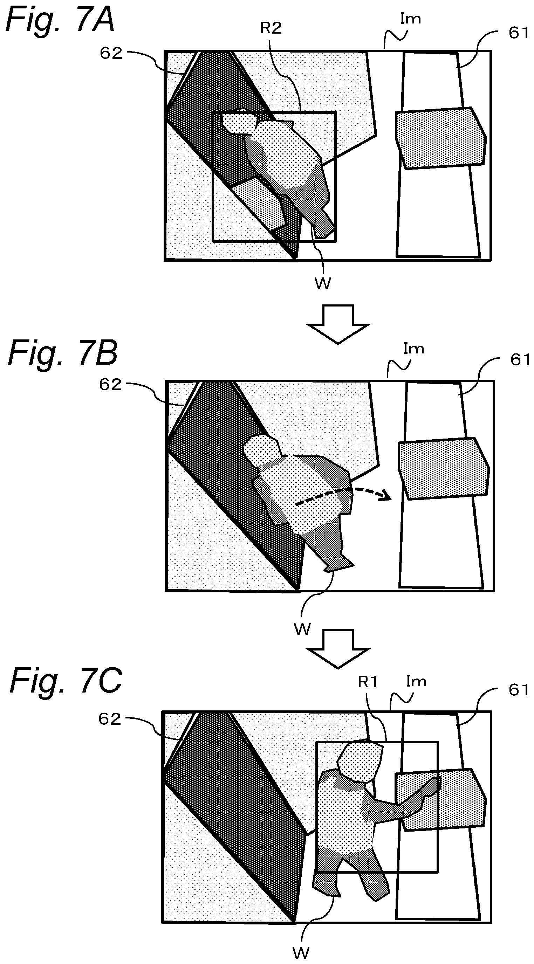

The task detection processing in step S3 illustrated in Fig. 5 will now be explained in detail with reference to Figs. 6 and 7.

Fig. 6 is a flowchart illustrating the task detection processing (S3 in Fig. 5) performed in the task analysis device 5 according to the present embodiment. Figs. 7A to 7C are views for explaining the task detection processing.

In the flowchart illustrated in Fig. 6, to begin with, the controller 50 detects the task by causing the task detection model 51 to execute the image recognition processing on the captured image Im indicated by the image data corresponding to the one frame selected in step S2 in Fig. 5 (S11). For example, in the captured image Im illustrated in Fig. 3A, a detection result including the detection area R1, associated with the "picking up" process, is obtained, in (S11).

The controller 50 then determines whether the target task is detected on the current frame, based on the obtained detection result (S12). In the example illustrated in Fig. 3A, it is determined that the target task is detected, based on the detection result including the detection area R1 (YES in S12).

When the target task is detected (YES in S12), the controller 50 determines whether the detected the carrying task process is "placing", based on the current detection result (S13). In the example illustrated in Fig. 3A, as the detected the carrying task process is "picking up" and not "placing", the controller 50 goes to NO in step S13.

When it is determined that the current process is not "placing" (NO in S13), the controller 50 stores the time at which the target task is detected, based on the current detection result (S15). The time at which the target task is detected is recorded as the time at which the camera 2 captures the frame on which the carrying task is detected, for example. In the example illustrated in Fig. 3A, the controller 50 retains the time ta at which the "picking up" process is detected, in the storage 52, for example. In step S15, the controller 50 may retain the detected process associating with the time ta at which the carrying task is detected.

Once the current detection result is stored in the storage 52 (S16), the controller 50 ends the task detection processing (S3) illustrated in this flowchart, for one frame selected in step S2, for example. The controller 50 then returns to the processing of the flowchart illustrated in Fig. 5, and goes to step S4. For example, after the task detection processing (S3) is performed to the frame illustrated in Fig. 3A, the processing goes to NO in step S4. The frame at the time tb corresponding to the scene illustrated in Fig. 3B is then selected (S2), and the task detection processing (S3) is repeated.

In the example illustrated in Fig. 3B, the process of "carrying" the package, among the processes of the carrying task, is not detected in the image recognition in step S11. Therefore, it is determined that no target task is detected (NO in S12). The undetected period T1 may appears, as indicated in the uncompensated task timeline 70 illustrated in Fig. 4A, when no target task is detected although the target task is actually performed, as described above.

When no target task is detected (NO in S12), the controller 50 stores the current detection result in the storage 52 (S16) without executing processing in steps S13 to S15, and goes to step S4 in Fig. 5. For example, after the task detection processing (S3) is performed for the frame illustrated in Fig. 3B, the frame at the time tc corresponding to the scene illustrated in Fig. 3C is selected (NO in S4, S2).

In the example illustrated in Fig. 3C, the controller 50 determines that the target task is detected based on the detection area R2 obtained by the detection of the task (S11) (YES in S12). When the detection result in which the process of "placing" the package is obtained, in association with the detection area R2, the controller 50 goes to YES in step S13.

When it is determined that the current process is "placing" the package (YES in S13), the controller 50 refers to a time at which the target task is performed previously, the time being stored in step S15, and interpolates the detection result with the target task. Interpolated herein is the detection result within a period from the time of the current frame to the time at which the last target task is detected (S14). In the example illustrated in Fig. 4A, the detection result is interpolated presuming that the target task is detected in the undetected period T1 spanning from the time tc at which the "placing" process is detected in the current frame to the time ta at which the "picking up" process is detected previously. As described above, when the "placing" process is detected, it can be estimated that the carrying task is continuously performed after the time ta at which the "picking up" process is detected, based on that the "placing" process is performed at the end of one cycle of the carrying task and that "picking up" process is performed at the beginning of the carrying task. Therefore, the detection result in the undetected period T1 is interpolated with an estimated detection result of the target task.

The controller 50 then stores the time tc at which the "placing" process is detected, as the time at which the target task is detected (S15). The controller 50 then stores the current detection result (S16), and goes to step S4 in Fig. 5.

Unlike the example illustrated in Figs. 3A to 3C and Figs. 7A to 7C illustrate a captured image Im including a period in which the operator W is not performing the carrying task. The task analysis device 5 according to the present embodiment executes the task detection processing (S3) so as not to interpolate the detection result erroneously during the period in which the operator W is not performing the carrying task. This point will now be explained with reference to Figs. 7A to 7C.

Fig. 7A illustrates a scene in which the operator W places the package in the unloading port 62, in the same manner as the scene illustrated in Fig. 3C. In the uncompensated task timeline 70 illustrated in Fig. 4A, the target task is detected after the time tc, based on the captured image Im illustrated in Fig. 7A, for example.

Fig. 7B illustrates a scene where the operator W who has placed the package, in the scene illustrated in Fig. 7A, turns around toward the conveyor line 61. In Fig. 7B, the operator W does not have any package, so the operator W is not performing the carrying task. In this case, as illustrated in Fig. 4A, a period T2 in which there is no detection of the target task appears.

Fig. 7C illustrates a scene in which the operator W turns around from the scene illustrated in Fig. 7B, and picks up the next package from the conveyor line 61. In the task timeline 70 illustrated in Fig. 4A, the target task is detected again, after the period T2.

To being with, when the frame illustrated in Fig. 7A is selected (S2), the controller 50 executes the processing of steps S11 to S16, in the same manner as the example illustrated in Fig. 3C. In the example illustrated in Fig. 7A, the time at which the "placing" process is detected is stored, as the time when the target task is detected (S15). The controller 50 then selects the next frame in Fig. 7B (NO in S4, S2).

In the example illustrated in Fig. 7B, the operator W is not performing the carrying task of carrying the package, and therefore, the target task is not detected in step S11 (NO in S12). In this example, the controller 50 goes to step S16, stores the current detection result, and then goes to NO in step S4 illustrated in Fig. 5.

When the frame illustrated in Fig. 7C is selected (S2), the controller 50 detects the process of "picking up" a package (S11). The controller 50 then determines that the target task is detected (YES in S12), and goes to step S13. As the current process is not "placing" the package (NO in S13), the controller 50 does not execute the interpolation processing (S14), and performs the processing in step S15 and subsequent processes. As a result, as illustrated in Figs. 4A and 4B, it is possible to avoid erroneously interpolating the detection result in the period T2 in which the operator W does not perform the target task.

By the task detection processing (S3) described above, the controller 50 detects the task at each time (S11). When the target task is then detected (YES in S12), the detection time is stored (S15). When the current process is the process of "placing" the package, by which the carrying task is ended (YES in S13), the controller 50 interpolates the detection result over the period from the detection time of the current target task to the detection time of the immediately previous target task, with the target task (S14). Therefore, it is possible to interpolate the detection result, presuming that the target task is detected within the undetected period T1, in which no target task is detected although the operator W carries a package, for example.

By contrast, in a case where the current process is other than "placing" (NO in S13), the controller 50 does not interpolate the detection result even when no target task is detected. Thus, for example, in the uncompensated task timeline 70 illustrated in Fig. 4A, the detection result is not interpolated during the period T2 in which it is presumed that the operator W is not performing the target task, e.g., the operator W is turning around from the unloading port 62 to the conveyor line 61 without carrying the package, as illustrated in Fig. 7B. As a result, the accurately compensated task timeline 7 is obtained, as illustrated in Fig. 4B, based on the interpolated detection result.

In a case where the "carrying" process is detected in step S11, the controller 50 stores the time at which the target task is detected, in the same manner as when the "picking up" process is detected in the example illustrated in Fig. 3A (S15). In this case, in step S15, the controller 50 retains the time at which the process of "carrying" the package is detected, in the storage 52, separately from the time at which the "picking up" process is detected, for example. When the "placing" process is detected next (YES in S13), the controller 50 interpolates the detection result within the period up to the time at which the last "picking up" process is detected (S14). In this manner, even when the target task is detected at a time in the middle of the undetected period T1, the detection result can be interpolated accurately.

In addition, when storing the current detection result (S16), the controller 50 may store only whether the task is the carrying task, that is, whether the task is the target task or non-task, without storing the categories of the processes in the carrying task.

### 2-3-1. Modification of First Embodiment

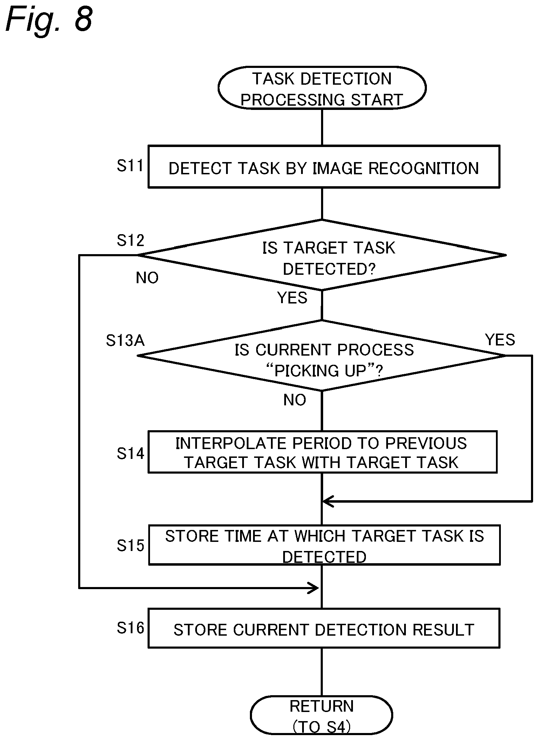

In the first embodiment, the task analysis device 5 performs the interpolation processing (S14) when the current detected process is "placing" (YES in S13). However, the interpolation processing may be performed in accordance with whether the current detected process is the "picking up" process, by which the carrying task is started. Such a modification will now be explained with reference to Fig. 8.

Fig. 8 is a flowchart illustrating task detection processing performed in the task analysis device 5 according to the modification of the first embodiment. For example, instead of the processing of step S13 illustrated in Fig. 6, the controller 50 determines whether the current process, which is based on the detection result acquired in step S11, is a "picking up" process (S13A).

When the current process is the "picking up" process (YES in S13A), the controller 50 does not execute the processing of step S14, and stores the time at which this process is detected, as the time of the target task (S15). When the current process is not a "picking up" process (NO in S13A), that is, when the detected process is a process in the middle of the carrying task or at the end of the carrying task, the controller 50 interpolates the detection result of the target task, for the period from the time corresponding to the current detection result to the immediately previous time at which the target task is detected (S14).

With such a task detection processing, when the "carrying" process is detected in step S11, the target task is detected (YES in S12) but the current process is not "picking up" (NO in S13). Therefore, the process goes to step S14. In this case, the controller 50 interpolates the detection result within a period from the time at which the "carrying" process is detected to the last time at which the target task is detected (S14). Therefore, for example, even when the "carrying" process is detected at a time in the middle of the undetected period T1, and the "placing" process is then detected subsequently, the controller 50 can interpolate, in step S14, the detection result in the undetected period T1 by referring to times at which the target tasks are detected prior to each of these processes.

### 3. Effects

As described above, the task analysis device 5 according to the present embodiment generates information on the task performed by an operator W. The task analysis device 5 includes the device I/F 54 as an example of the input interface, and the controller 50. The device I/F 54 acquires image data indicating a captured image of the operator W performing the task (S1). Based on the image data, the controller 50 sequentially detects the target task, as an example of the task performed by the operator W (S2 to S4), to generate the task timeline 7 as an example of the task detection information indicating the detection result of the target task (S5). The target task includes a plurality of processes performed by the operator W. The controller 50 compensates the task detection information such as the uncompensated task timeline 70 by interpolating the detection result of the target task within the undetected period T 1, in accordance with the pre process and post process in the target task of the undetected period (S3), the undetected period being a period in which the task is not detected, the pre process being a process of the task detected previously to the undetected period, and the post process being a process of the task detected subsequently to the undetected period.

By the task analysis device 5 described above, when the undetected period T1appears where the performed target task is not detected, the compensated task timeline 7 is obtained by interpolating the detection result in the undetected period T1, in accordance with the processes of the target task detected prior to and/or subsequently to the undetected period T1 (S3, S5). This makes it possible to accurately detect the target task, as an example of the specific task performed by the operator W.

In the present embodiment, the plurality of processes include the process picking up a package, as an example of a first process starting the target task, the process carrying the package, as an example of a second process continuing the target task, and the process placing the package, as an example of a third process ending the target task. When the post process of the undetected period is the first process, the controller 50 does not interpolate the detection result of the target task in the undetected period. For example, as in the example illustrated in Figs. 7A to 7C, when the detected process is "picking up" (YES in S13A) or when the detected process is not the "placing" (NO in S13), at the time of the current detection of the target task, the controller 50 does not interpolate the task detection result within the period T2.

As described above, in the period T2 in which any process of the target task is not detected until detecting the "picking up" process by which the target task is started, it can be estimated that no target task is performed. Therefore, the detection result in the period T2 is not interpolated. In this manner, it is possible to obtain the task timeline 7 compensated accurately, without erroneously interpolating the detection result of a period in which the target task is not performed.

In the present embodiment, the controller 50 interpolates the detection result of the target task in the undetected period when at least one of following conditions are satisfied: the post process of the undetected period is the second process; and the post process of the undetected period is the third process. For example, as in the example illustrated in Figs. 3A to 3C, the controller 50 interpolates the detection result of the target task in the undetected period T1 (S14) at least one of following conditions are satisfied in the current detection of target task detection: the "placing" process is detected (YES in S13); and the "picking up" process is not detected (NO in S13A). As it can be estimated that the target task is continuously performed during the undetected period T1 before the process continuing or ending the target task is detected, it is possible to interpolate the detection result of the target task.

In the present embodiment, the target task is the carrying task moving a package, as an example of an object. The carrying task includes a process picking up a package as the first process (an example of the process starting moving the object), a process carrying the package as the second process (an example of the process continuing moving the object), and a process of placing the package as the third process (an example of the process ending moving the object). The object in the carrying task is not limited to a package, and may be various types of objects such as parts. The target task is not limited to the carrying task, and may be an assembly task for attaching a part. An assembly task includes a process of picking up a part as the first process (an example of the process starting the attachment of an object), a process of carrying the part as the second process (an example of the process continuing the attachment of the object), and a process of attaching the part as the third process (an example of the process ending the attachment of an object).

In the present embodiment, the controller 50 identifies a performed process based on the image data (S11), and compensates the task detection information, such as the uncompensated task timeline 70, based on a result of identifying the performed process (S12 to S16). For example, based on the detection result by the task detection model 51 applied with machine learning for identifying each process of the carrying task, as each process of the target task, the task detection processing (S3) can be performed accurately.

The task analysis method in the present embodiment is a method for generating information on the task performed by an operator W. The method, executed by controller 50 of a computer, includes: processing (S1) to acquire image data indicating a captured image of the operator W performing task, and processing (S2 to S5) to detect a target task, as an example of the task performed by the operator W, sequentially, based on the image data, to generate the task timeline 7 as an example of task detection information indicating a detection result of the target task. The controller 50 of the computer then compensates the task detection information such as the uncompensated task timeline 70 by interpolating a detection result of the target task within the undetected period T1, in accordance with one or both of a pre process and a post process of the undetected period (S3), the undetected period being a period in which the task is not detected, the pre process being a process of the task detected previously to the undetected period, and the post process being a process of the task detected subsequently to the undetected period.

In the present embodiment, a program for causing a controller of a computer to execute the task analysis method as described above is provided. By the task analysis method according to the present embodiment, it is possible to accurately detect a target task such as the carrying task, as an example of the specific task, performed by the operator W.

### (Second Embodiment)

Explained above the first embodiment is an example of the task analysis device 5 that implements the interpolation processing with machine learning that causes the task detection model 51 to identify the processes of the carrying task, but the interpolation processing can be implemented without such machine learning. In a second embodiment, a task analysis device 5 that implements the interpolation processing by using a moving direction of the operator W, the moving direction being set in accordance with a specific process of the carrying task, will be explained.

The task analysis device 5 according to the present embodiment will be explained, by omitting the explanations of configurations and operations that are similar to those of the task analysis device 5 according to the first embodiment, as appropriate.

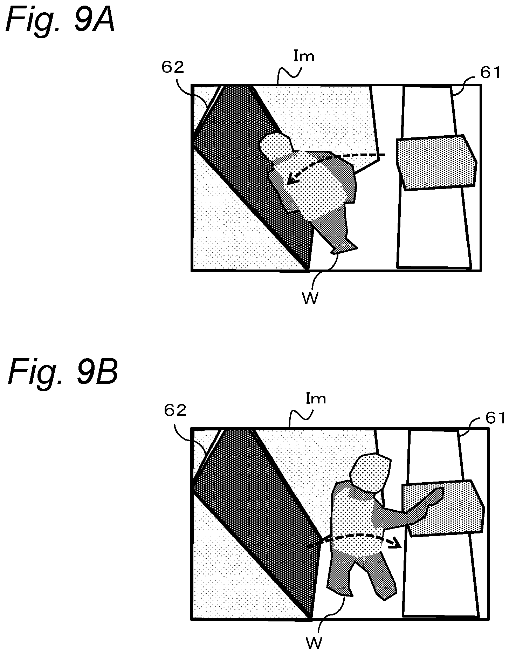

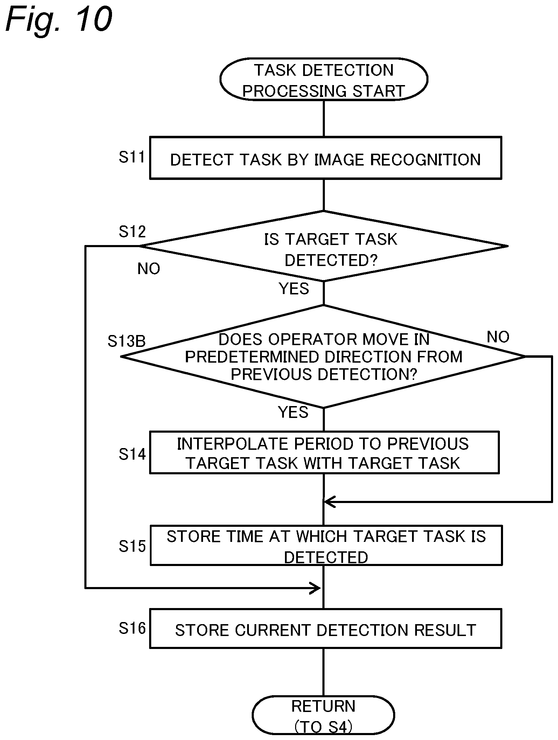

An operation of the task analysis device 5 according to the present embodiment will now be explained with reference to Figs. 9 and 10. Figs. 9A and 9B are views for explaining task detection processing performed in the task analysis device 5 according to the present embodiment. Fig. 10 is a flowchart illustrating the task detection processing according to the present embodiment.

Fig. 9A illustrates a captured image Im obtained by capturing an image of the operator W carrying a package from the conveyor line 61 to the unloading port 62, in the same manner as in Fig. 3B. Fig. 9B illustrates a captured image Im obtained by capturing an image of the operator W turning around from the unloading port 62 toward the conveyor line 61, in the same manner as in Fig. 7B.

As illustrated in Figs. 9(A) and (B), it can be presumed that the operator W moves in different directions between when in the middle of the carrying task for carrying a package, and when not in the middle of the carrying task. Therefore, in the task analysis device 5 according to the present embodiment, a predetermined direction in accordance with the process of the operator W carrying a package in the workspace 6 is defined on the captured image Im, in advance, for example. In the present embodiment, the direction from the conveyor line 61 toward the unloading port 62 is defined as the predetermined direction.

In the flowchart illustrated in Fig. 10, the controller 50 determines whether the operator W is moving in the predetermined direction (S13B), instead of determining the process identified by the task detection model 51 (S13) in the task detection processing (S3), as in the first embodiment. For example, the controller 50 performs the detection of the carrying task on the image data (S11), and determines the moving direction of the operator W, based on the position of the detection area included in the obtained detection result.

For example, when the target task is detected (YES in S12), the controller 50 compares the position of the current detection area with the position of the previous detection area, and determines whether the operator W is moving in the predetermined direction (S13B).

In the example illustrated in Fig. 9A, it can be estimated that the operator W is moving in a predetermined direction, and therefore, the operator W is performing the process of carrying a package. When it is determined that the operator W is moving in the predetermined direction (YES in S13B), the controller 50 interpolates the detection result with the target task, for the period from the current detection time of the target task to the last detection time of the target task (S14).

By contrast, in the example illustrated in Fig. 9B, the operator W is moving in a direction different from the predetermined direction, and it can be estimated that the process is not the process of carrying the package. When it is determined that the moving direction of the operator W is not the predetermined direction (NO in S13B), the controller 50 goes to step S15, without performing the interpolation of the detection result.

As described above, in the present embodiment, the controller 50 determines whether a moving direction of the operator W is a predetermined direction based on the image data (S13B), and compensates the task detection information such as the uncompensated task timeline 70 based on a result of determining the moving direction (S14 to S16). The moving direction is a direction in which the operator W moves when the target task, as an example of the task, is detected (YES in S12). The predetermined direction is set on the captured image Im, as an example of an image indicated by image data, in accordance with the process carrying the package, as an example of the second process.

In the present embodiment, when it is determined that the moving direction of the operator W is the predetermined direction (YES in S13B), the controller 50 interpolates the detection result of the target task in the undetected period T1 (S14). When it is determined that the moving direction of the operator W is not the predetermined direction (NO in S13B), the controller 50 does not interpolate the result of detecting the target task in the undetected period, such as the period T2.

As described above, in the workspace 6 in which a task involving movements in accordance with a rule, such as the carrying task, is performed, it is possible to estimate whether the operator W performs the target task, such as carrying a package, based on the rule such as the moving direction of the operator W. Therefore, in the present embodiment, the task detection model 51 merely needs to detect the presence of the carrying task, and it is possible to omit the identification of the processes included in the carrying task. The task analysis device 5 according to the present embodiment can also obtain the task timeline 7 compensated appropriately, by interpolating the detection result in the undetected period T1 (S5).

Note that, explained above is an example in which the moving direction of the operator W is determined based on the position of the detection area detected by the task detection model 51. However, it is possible for the task analysis device 5 to use another image recognition model to recognize the position of a person, such as the operator W, in the captured image Im, in addition to the task detection model 51. In such a case, the controller 50 may acquire the detection result from the task detection model 51 and from the image recognition model in step S11, and determine the moving direction of the operator W, by comparing the positions of the operator W recognized in last time and current time of the detection, in step S13B. Alternatively, the machine learning may be performed in such a manner that the task detection model 51 outputs the detection area of the operator W not performing the target task, as a category different from the detection area of an operator performing the target task.

### (Third Embodiment)

Explained in the second embodiment is an example in which the task analysis device 5 implements the interpolation processing by using the moving direction of the operator W, the movement in accordance with a specific process of the target task, in the task detection processing. Explained in a third embodiment is an example in which a task analysis device 5 implements the interpolation processing by using the area where the operator W is located in the workspace 6, the area corresponding to a specific process.

The task analysis device 5 according to the present embodiment will be explained, by omitting the explanations of configurations and operations that are similar to those of the task analysis device 5 according to the first and the second embodiments, as appropriate.

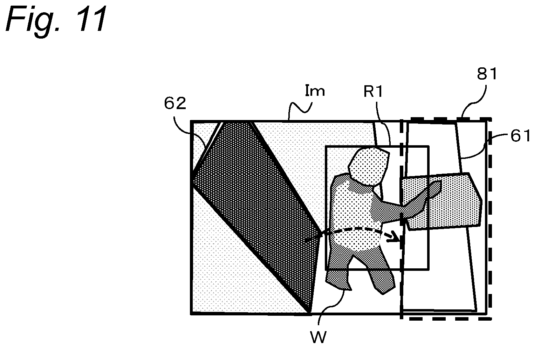

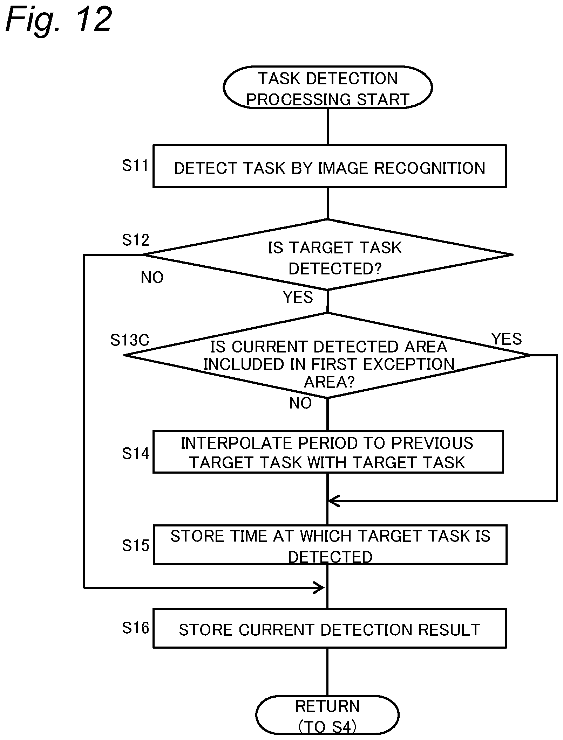

An operation of the task analysis device 5 according to the present embodiment will now be explained with reference to Figs. 11 and 12. Fig. 11 is a view for explaining task detection processing performed in the task analysis device 5 according to the present embodiment. Fig. 12 is a flowchart illustrating the task detection processing according to the present embodiment.

Fig. 11 illustrates a captured image Im obtained by capturing an image of the operator W turning around from the unloading port 62 to pick up the package on the conveyor line 61. Fig. 11 illustrates a first exception area 81 defined in advance as an area in the captured image Im, in the task analysis device 5 according to the present embodiment. For example, the first exception area 81 is defined as an area corresponding to the position at which the operator W picks up a new package from the conveyor line 61, that is, the position at which the operator W starts the carrying task, when the operator W performs the carrying task in the workspace 6. The first exception area 81 is an example of a predetermined area in the present embodiment.

As illustrated in Fig. 11, when the first exception area 81 includes the detection area R1 in which the carrying task is detected, it can be estimated that the operator W performs the process of picking up a package, that is, a process of starting handling a new package. In this case, it can be presumed that the operator W would not have any package during the period before the carrying task is detected. In the task analysis device 5 according to the present embodiment, when the carrying task is detected in the first exception area 81, presuming that the carrying task is not performed in the last undetected period of the target task, and therefore, the interpolation of the detection result is skipped. By contrast, when the carrying task is detected in an area other than the first exception area 81, it can be presumed that the operator W performing a process of continuing or ending the carrying task, and therefore, the interpolation is applied to the detection result within the last undetected period T1.

In the flowchart illustrated in Fig. 12, the controller 50 determines whether the current detection area is included in the first exception area 81 (S13C), instead of determining the moving direction of the operator W, in the task detection processing in the second embodiment (S13B).

When the target task is detected (YES in S12), the controller 50 determines whether the current detection area is included in first exception area 81, that is, whether the current detection area is within the first exception area 81 (S13C), based on the position of the detection area in the result of the task detection (S11). For example, the controller 50 determines that the detection area is included in first exception area 81 when a ratio of a part in the detection area is higher than or equal to a predetermined ratio, in captured image Im, the part overlapping with the first exception area 81. The predetermined ratio is defined in advance as a high enough ratio such that a part of the body of the operator W can presumably enters the first exception area 81 (e.g., 80%), for example.

The determination in step S13C may also be made in accordance with whether the center of the detection area is within the first exception area 81. Alternatively, it is also possible to convert the coordinates indicating positions in the captured image Im into coordinates on a map of the workspace 6, and to perform the determination in S13Cin accordance with the positional relationship between the detection area and the area corresponding to the first exception area 81 in the map.

When the current detection area is within the first exception area 81 (YES in S13C), the controller 50 does not interpolate the detection result (S14) up to the time at which the last target task is detected, and goes to step S15. In the example in Fig. 11, the controller 50 determines that the detection area R1 is included in the first exception area 81 (YES in S13C), and therefore, does not perform the interpolation processing (S14).

By contrast, when the current detection area is not within first exception area 81 (NO in S13C), the controller 50 performs the interpolation processing (S14).

As described above, in the present embodiment, the controller 50 determines whether the detection area R1 is included in the first exception area 81, which is an example of at least one predetermined area (S13C), based on the image data, and compensates the task timeline 7 (an example of the task detection information) based on a result of determining the detected position. The detection area R1 is an example of a detected position at which the operator W is located when the target task (an example of the task) is detected. The at least one predetermined area is set in accordance with at least one of the first and third processes, on the captured image Im, as an example of the image indicated by the image data. The first exception area 81 is set in accordance with the process picking up a package, as an example of the first process. Therefore, the compensation of the task timeline 7 can be performed based on the detected position, without particularly using the result of the task detection model 51 detecting the processes of the carrying task.

Furthermore, in the present embodiment, the controller 50 recognizes a detection area R1, as an example of the detected position, based on the image data (S11), and determines whether a detected position recognized subsequently to the undetected period is included in the first exception area 81 (an example of the predetermined area) in the captured image Im, as an example of the image indicated by the image data (S13C). The first exception area 81 is set in accordance with the process picking up the package (an example of the first process). When the detected position after the undetected period T1 is not included in first exception area 81 (NO in S13C), the controller 50 interpolates the detection result of the target task in the undetected period (S14). When the detected position after the undetected period is included in first exception area 81 (YES in S13C), the controller 50 skips the interpolation of the detection result of the target task in the undetected period, such as the period T2. As described above, when the detected position is included in the first exception area 81, the post process of the undetected period is estimated to correspond to the process of picking up the package, that is, the process at the beginning of the task, for example. Therefore, it is possible to obtain the task timeline 7 with the detection result in the period T2 compensated accurately, without being interpolated erroneously.

### (Fourth Embodiment)

Explained in the third embodiment is an example of the task analysis device 5 that performs the interpolation processing using a detected area in the task detection processing, the detected area corresponding to the process at the beginning of the carrying task. Explained in the fourth embodiment is the task analysis device 5 that uses an area corresponding to the process at the end of the carrying task, in addition to the process at the beginning of the carrying task.

The task analysis device 5 according to the present embodiment will be explained, by omitting the explanations of configurations and operations that are similar to those of the task analysis device 5 according to the first to the third embodiments, as appropriate.

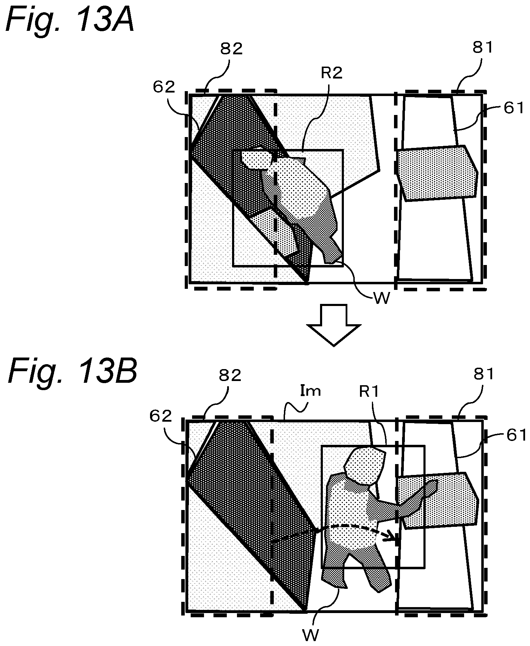

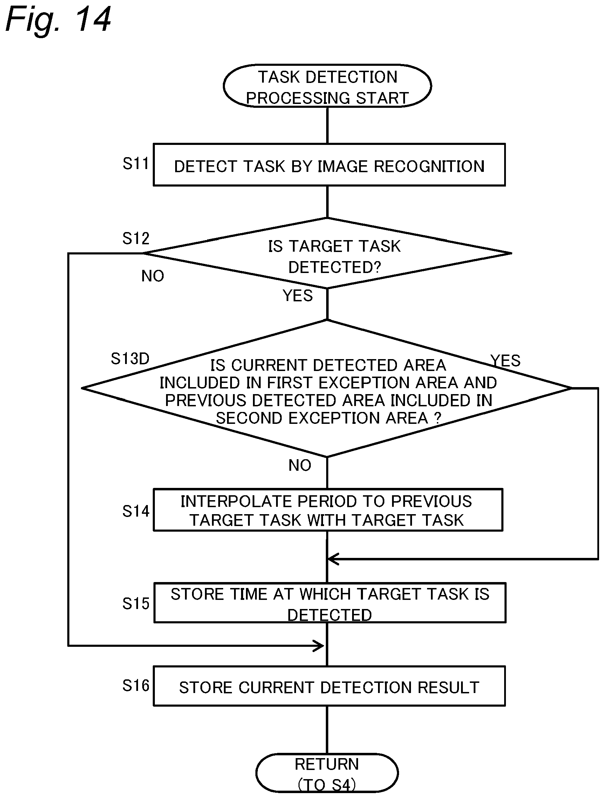

An operation of the task analysis device 5 according to the present embodiment will now be explained with reference to Figs. 13 and 14. Figs. 13A and 13B are views for explaining task detection processing performed in the task analysis device 5 according to the present embodiment. Fig. 14 is a flowchart illustrating the task detection processing according to the present embodiment. In the same manner as Fig. 7A, Fig. 13A illustrates a captured image Im of an operator W placing a package in the unloading port 62. Fig. 13B illustrates a captured image Im of the operator W picking up a package from the conveyor line 61 after placing the package in the scene illustrated in Fig. 13 A.

Figs. 13A and 13B illustrate a second exception area 82 set in advance, as an area in the captured image Im, in the task analysis device 5 according to the present embodiment, in addition to the first exception area 81 set in the same manner as the task analysis device 5 according to the third embodiment. For example, the second exception area 82 is defined as an area corresponding to a position where the package, picked up from the conveyor line 61 and carried, is placed in the unloading port 62 when the operator W performs the carrying task in the workspace 6, that is, the position at which the carrying task is ended. The first exception area 81 and the second exception area 82 are examples of a predetermined area in the present embodiment, and are examples of the starting area and the ending area in the present embodiment, respectively.

As illustrated in Fig. 13A, when the second exception area 82 includes the detection area R2 in which the carrying task is detected, it is estimated that the operator W performs the process of placing the package, that is, the process of ending one cycle of the carrying task. Then, when the detection area R1 is included in the first exception area 81, as illustrated in Fig.13B, it can be estimated that the operator W performing the process of picking up the next package, that is, the process of starting the next cycle of the carrying task. In such a case, it is expected that the operator W makes an action of turning around from the unloading port 62 to the conveyor line 61 without holding the package, that is, an action other than the target task, within the period of transition from the scene illustrated in Fig.13A to the scene illustrated in Fig. 13B.

As described above, when the carrying task is detected in the first exception area 81 corresponding to the beginning, after the carrying task is detected in the second exception area 82 corresponding to the end of the task, it is expected that the carrying task is not performed within the period in which no target task is detected. In such a case, the task analysis device 5 according to the present embodiment does not interpolate the detection result.

By contrast, other than the period estimated to be the transition period from the end to the beginning of the carrying task as described above, it can be estimated that the operator W performs any one of the processes of the carrying task in the undetected period T1 just before the carrying task is detected. In such a case, the task analysis device 5 interpolates the detection result in the undetected period T1.

In the flowchart illustrated in Fig. 14, instead of determining whether the current detection area is within the first exception area 81, as in the task detection processing according to the third embodiment (S13C), the controller 50 determines whether the current detection area is included in the first exception area 81, and whether the detection area in which the last target task is detected is included in the second exception area 82 (S13D).

In the present embodiment, when the target task is detected (YES in S12), the controller 50 determines whether the current detection area is included in the first exception area 81, and whether the detection area corresponding to the last detected target task is included in the second exception area 82 (S13D). The controller 50 identifies the detection area corresponding to the last detected target task, by referring to the detection time of the last target task stored in step S15, and the past detection result stored in step S16, for example. For example, the controller 50 determines whether each of the current detection area is included in the first exception area 81, and whether the last detection area is included in the second exception area 82, according to the same criteria as that in step S13C in the task detection processing according to the third embodiment.

For example, when the task detection processing is applied to the captured image Im illustrated in Fig.13B, the controller 50 determines whether the current detection area R1 is included in the first exception area 81, and the last detection area R2 of the target task as illustrated in Fig. 13A is included in the second exception area 82 (S13D). In the examples illustrated in Figs. 13A and 13B, the detection area R1 is included in the first exception area 81, and the detection area R2 is included in the second exception area 82 (YES in S13D). Therefore, the controller 50 goes to step S15, without performing the interpolation processing (S14).

By contrast, when at least one of the following conditions is met, that is, a condition that the current detection area is not included in the first exception area 81 or a condition that the detection area of the last detected target task is not included in the second exception area 82 (NO in S13D), the controller 50 performs the interpolation processing (S14).

As described above, in the present embodiment, at least one predetermined area includes the first exception area 81 and the second exception area 82. The fist exception area 81 corresponds to the process picking up the package, as an example of the starting area corresponding to the first process. The second exception area 82 corresponds to the process placing the package, as an example of the ending area corresponding to the third process. When the controller 50 determines that at least one of the following conditions is met, that is, when the last detection area is not included in second exception area 82, as an example of the detected position before the undetected period, or when the current detection area is not included in first exception area 81, as an example of the detected position after the undetected period (NO in S13), the controller 50 interpolates the detection result of the target task (an example of the task) within the undetected period T1 (S14). When determining that detection area R2 is included in the second exception area 82 (an example of the detected position before the undetected period), and that the detection area R1 is included in the first exception area 81 (an example of the detected position after the undetected period) (YES in S13D), the controller 50 does not interpolate the detection result of the target task within the undetected period, such as the period T2.

In this manner, based on the current and last detected positions, it is possible to estimate the processes performed pre process and/or post process of the undetected period, in the task detection processing. Therefore, it is possible to determine whether to perform the interpolation processing or not (S14) accurately, without particularly using the result of the task detection model 51 distinguishing the processes of the target task. In the present embodiment, the controller 50 determines whether a previous detection area of the target task, is included in the second exception area 82 (an example of the ending area) in the captured image Im as an example of the image indicated by the image data, and whether a current detection area is included in the first exception area 81 (an example of the starting area) (S13D)., the previous detection area being an example of the detected position recognized before the undetected period, and the current detection area being an example of the detected position recognized after the undetected period.

### (Other Embodiments)

The first to the fourth embodiments are described above, as some examples of the technology disclosed in the present application. However, the technology according to the present disclosure is not limited thereto, and may also be applied to embodiments including changes, replacements, additions, omissions, and the like made as appropriate. In addition, it is also possible to combine the elements described in the embodiments to form a new embodiment. Other embodiments will now be explained as some examples.

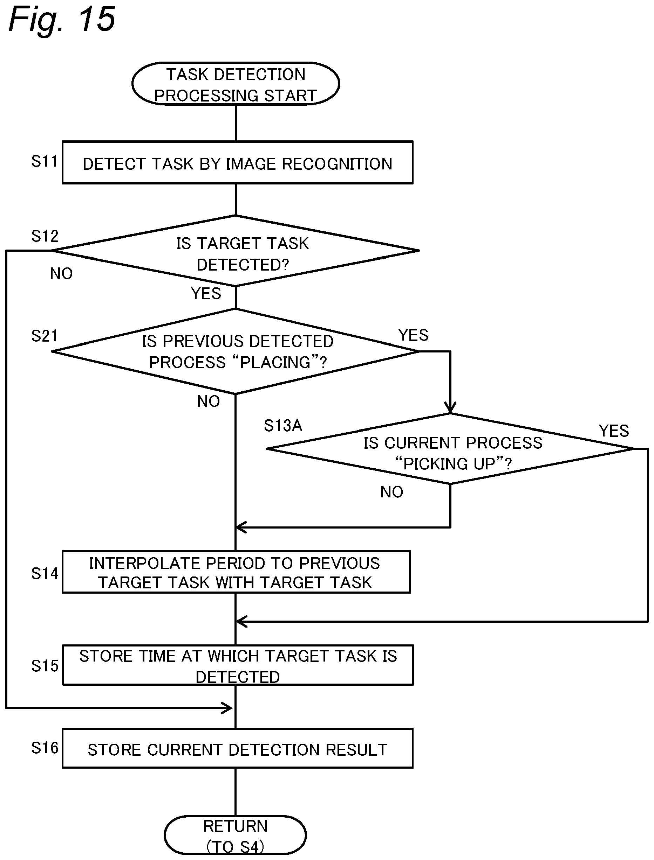

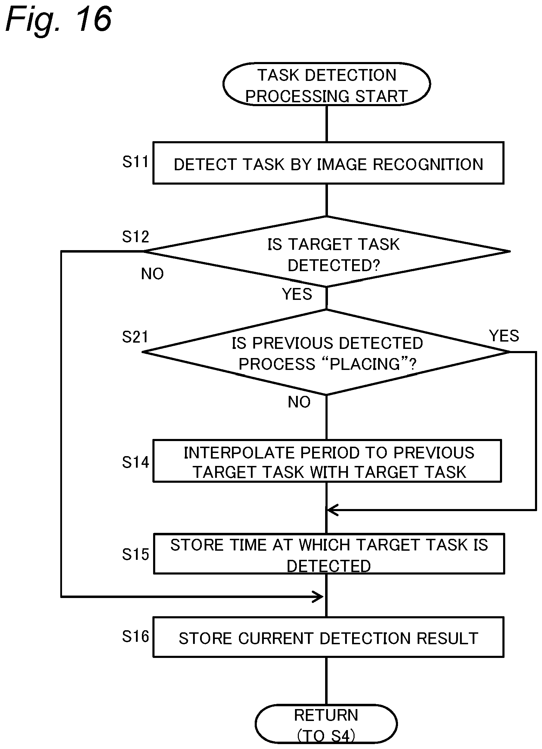

Explained in the first embodiment is an example of the task analysis device 5 that implements the interpolation processing by determining the post process of the undetected period (S13, S13A) in the task detection processing (S3). The task analysis device 5 according to the present embodiment may further implement the interpolation processing, also based on the pre process of the undetected period. For example, by retaining in step S15, information on the processes associating with the time of the target task, the controller 50 of the task analysis device 5 can refer to the information for the time at which the target task is previously detected, to perform the above processing when the target task is detected subsequently to the undetected period. Such a modification will now be explained with reference to Figs. 15 and 16.

Fig. 15 illustrates a flowchart illustrating the task detection processing according to this modification. In this modification, when the target task is detected (YES in S12), the controller 50 determines, in addition to the same processing as that illustrated Fig. 8, whether the process in which the target task last detected is the "placing" process (S21). The controller 50 performs step S15 by referring to the information on the process retained in step S21 in the last cycle of the task detection processing, for example. In the present modification, when the last process is the "placing" process (YES in S21) and the current process is "picking up" process (YES in S13A), the controller 50 does not interpolate the undetected period such as period T2. The controller 50 interpolates the undetected period T1 when at least one of the following conditions are met, that is, a condition that the last detected process is not the "placing" process (NO in S21) and a condition that the current process is not the "picking up" process (NO in S13A) (S14).

Explained above in the modification is an example in which the interpolation processing is performed in accordance with the post process of the undetected period, in addition to the process detected when the last target task is detected, that is, the pre process of the undetected period. The task analysis device 5 according to the present modification may perform the interpolation processing in accordance with the process detected prior to the undetected period, without particularly determining the post process of the undetected period. Fig. 16 illustrates a flowchart of the task detection processing in this modification. In this modification, the controller 50 does not interpolate the detection result within the undetected period, such as period T2, when the immediately previous process is "placing" (YES in S21), based on the same determination as performed in step S21 in Fig. 15. When the previous process is not "placing" (NO in S21), that is, when the last process is "picking up" or "carrying", the controller 50 performs the interpolation of the undetected period T1.

As described above, in the present embodiment, the task analysis device 5 may have the configuration that is same as those of the embodiments described above, and the controller 50 may compensate the task detection information, such as the uncompensated task timeline 70, by interpolating the detection result of the target task in the undetected period T1, in accordance with the process of the target task detected previously or subsequently to the undetected period in which no target task is detected. This also makes it possible to accurately detect the target task, as an example of the specific task performed by the operator W.

Furthermore, in the present embodiment, when the pre process of the undetected period is the third process, and the post process of the undetected period is the first process, the controller 50 may not interpolate the detection result in the undetected period such as the period T2. Furthermore, the controller 50 may interpolate the task detection result in the undetected period T1 when at least one of the conditions are met, that is, when the pre process of the undetected period is the first or second process, and when the post process of the undetected period is the second or third process. In addition, the controller 50 may not interpolate the undetected period when the pre process of the undetected period is the third process, and to interpolate the undetected period when the pre process of the undetected period is the first or second process.

In the task detection processing according to the embodiments described above, the interpolation processing (S14) is performed in accordance with the process detected at the time of detecting the target task (S13). For example, in step S13, the task analysis device 5 according to the present embodiment may execute the interpolation processing (S14) based on a period in addition to the process at the time of the detection, the period being from the time of the detection to the time of the last detection of the target task. For example, interpolation may be performed when the period is shorter than a predetermined threshold. The predetermined threshold is set in advance as a period that is short enough to be considered as a period required for the operator W to carry the package, for example.

Explained above in the embodiments is an example in which the target task of the task analysis system 1 is one type of task that is the carrying task. The task analysis system 1 according to the present embodiment is also applicable to a plurality of types of tasks each as the target task. For example, when a plurality of types of carrying tasks carrying different types of objects are detected, interpolation processing may be performed to detection result for each type of the carrying task, in the same manner as in the embodiments described above.

Explained above in the embodiments is an example in which the target task of the task analysis system 1 is the carrying task. In the present embodiment, the target task of the task analysis system 1 is not limited to the carrying task, and may be any task including a plurality of processes.

Explained above in the embodiments is an example in which the task analysis system 1 is applied to the workspace 6 such as a logistics warehouse. In the present embodiment, the workspace where the task analysis system 1 and the task analysis device 5 are used, that is, a site is not particularly limited to the workspace 6 described above, and may be various types of sites such as a factory or a store floor. In addition, the carrying task to be analyzed by the task analysis system 1 is not limited to the examples described above, and may include various processes in accordance with various sites. In addition, the operator to be analyzed by the task analysis system 1 is not limited to a person such as the operator W, and may be any moving body capable of performing various types of task. For example, the moving body may be a robot, or may be various manned or unmanned vehicles.

As described above, the embodiments are described as examples of the technology according to the present disclosure. The accompanying drawings and the detailed description are provided for this purpose.

Accordingly, the components described in the accompanying drawings and the detailed description may include not only the components essential for solving the problems, but also components that are not essential for solving the problems, for the purpose of explaining the examples of the above technology. Therefore, it should not be immediately recognized that these non-essential components are essential based on the fact that these non-essential components are described in the accompanying drawings and the detailed description.

The present disclosure is applicable to data analysis for analyzing task performed by an operator in various environments such as a logistics site or a factory.

## Claims

1. A task analysis device for generating information on task performed by an operator, the task analysis device comprising:
an input interface configured to acquire image data indicating an image of the operator performing the task; and
a controller configured to detect the task performed by the operator sequentially, based on the image data, to generate task detection information indicating a detection result of the task, wherein
the task includes a plurality of processes performed by the operator, and
the controller is configured to compensate the task detection information by interpolating a detection result of the task within an undetected period, in accordance with one or both of a pre process and a post process of the undetected period, the undetected period being a period in which the task is not detected, the pre process being a process of the task detected previously to the undetected period, and the post process being a process of the task detected subsequently to the undetected period.

2. The task analysis device according to claim 1, wherein
the plurality of processes include a first process starting the task, a second process continuing the task, and a third process ending the task, and
the controller interpolates the detection result of the task within the undetected period, at least one of: in a case where the post process of the undetected period is the second process; or in a case where the post process of the undetected period is the third process.

3. The task analysis device according to claim 2, wherein the controller does not interpolate the detection result of the task within the undetected period when the post process of the undetected period is the first process.

4. The task analysis device according to claim 2 or 3, wherein
the task is a carrying task to move an object, and
the carrying task includes a process starting moving the object as the first process, a process continuing moving the object as the second process, and a process ending moving the object as the third process.

5. The task analysis device according to any one of claims 1 to 4, wherein the controller is configured to identify a performed process based on the image data, and to compensate the task detection information based on a result of identifying the performed process, the performed process being performed by the operator when the task is detected.

6. The task analysis device according to any one of claims 2 to 4, wherein
the controller is configured to determine whether a moving direction of the operator is a predetermined direction based on the image data, and to compensate the task detection information based on a result of determining the moving direction, the moving direction being a direction in which the operator moves when the operator is detected , and
the predetermined direction is set in accordance with the second process, on the image indicated by the image data.

7. The task analysis device according to any one of claims 2 to 4, wherein
the controller is configured to determine whether a detected position is included in at least one predetermined area, based on the image data, and to compensate the task detection information based on a result of determining the detected position, the detected position being a position at which the operator is located when the task is detected, and
the at least one predetermined area is set in accordance with at least one of the first process or the third process, on the image indicated by the image data.

8. The task analysis device according to claim 7, wherein
the at least one predetermined area includes a starting area corresponding to the first process and an ending area corresponding to the third process, and
the controller
interpolates the detection result of the task within the undetected period, when determining that the detected position is in a relation with the starting area or the ending area, the relation being at least one of that the detected position before the undetected period is not included in the ending area or that the detected position after the undetected period is not included in the starting area, and
does not interpolate the detection result of the task within the undetected period, when determining that the detected position is in a relation with the starting area or the ending are, the relation being that the detected position before the undetected period is included in the ending area and that the detected position after the undetected period is included in the starting area.

9. A task analysis method for generating information on task performed by an operator, the task analysis method, executed by a controller of a computer, including:
acquiring image data indicating an image of the operator; and
detecting the task performed by the operator sequentially, based on the image data, to generate task detection information indicating a detection result of the task, wherein
the task includes a plurality of processes performed by the operator, and
the controller of the computer is configured to compensate the task detection information by interpolating a task detection result of the task within an undetected period, in accordance with one or both of a pre process and a post process of the undetected period, the undetected period being a period in which the task is not detected, the pre process being a process of the task detected previously to the undetected period, and the post process being a process of the task detected subsequently to the undetected period.

10. A program for causing a controller of a computer to execute the task analysis method according to claim 9.
